# EUROPÄISCHE PATENTSCHRIFT

(11) **EP 2 216 637 B1**
(45) Veröffentlichungstag und Bekanntmachung des Hinweises auf die Patenterteilung: **30.05.2012**
(21) Anmeldenummer: 09405026.7
(22) Anmeldetag: 10.02.2009
(51) Int. Cl.: G01N 1/22, G08B 17/107

(54) **Messrohr für eine Vorrichtung zur Abtastung eines Strömungsmittels**
Measuring tube for a device for sampling a flowing medium
Tube de mesure pour un dispositif de balayage d'un fluide en écoulement

(43) Veröffentlichungstag der Anmeldung: 11.08.2010
(73) Patentinhaber: Sensomatik AG, 6375 Beckenried (CH)
(72) Erfinder: Schmidiger, Peter, 4654 Lostorf (CH)
(74) Vertreter: Rentsch Partner AG

(56) Entgegenhaltungen:
- WO-A-01/59737
- WO-A-2006/078205
- WO-A-2007/066128
- US-B2- 6 780 298

## Beschreibung

### FELD DER ERFINDUNG

Die vorliegende Erfindung bezieht sich auf das Gebiet der Messtechnik und insbesondere auf das Gebiet der Messtechnik für Strömungsanlagen; sie betrifft ein Messrohr für eine Vorrichtung zur Abtastung eines Strömungsmittels nach dem Oberbegriff des Anspruchs 1.

### HINTERGRUND DER ERFINDUNG

Vorrichtungen zur Abtastung eines Strömungsmittels sind bekannt. So zeigt beispielsweise die WO 2006/034303 ein Luftüberwachungssystem, umfassend eine Rohrleitung, die für einen optimierten Transport von Luftproben eine metallische Schicht auf ihrer Innenseite aufweist und von einem Mantel umgeben ist.

In der WO 2006/135575 ist eine solche Rohrleitung zwecks Transport einer Luftprobe mit einer elektrisch leitenden, inneren Oberfläche ausgestattet.

Die WO 2001/59737 offenbart eine Brandmeldevorrichtung, bei der ein Detektor seitlich an einem Lüftungsrohr angeordnet ist und eine Luftprobe durch Nutzung des Venturieffekts durch den Detektor geführt und dort auch analysiert wird.

In der WO 2005/017466 ist ein System zur Messung von Strömungsmitteleigenschaften gezeigt. Hierfür werden mittels eines Messrohrs, dass senkrecht zur Strömung in einer Rohrleitung angeordnet ist, Proben des Strömungsmittels entnommen und nach ausserhalb der Rohrleitung zu einem Detektor geführt; anschliessend wird die Strömungsmittelprobe wieder in die Rohrleitung zurückgeführt.

Die WO 2006/078205 zeigt eine Vorrichtung zur Ermittlung des Gehalts eines Strömungsmittels in einer Lüftungsleitung. Diese Vorrichtung umfasst einen Messfühler und einen einseitig daran angeschlossenen, röhrenförmigen Körper, der sich über einen Querschnitt der Lüftungsleitung erstreckt. Der röhrenförmige Körper weist einen Versorgungskanal mit einem Einlass in Richtung gegen die Hauptströmungsrichtung des Strömungsmittels und einem Ausflusskanal mit einem Auslass flussabwärts des Einlasses auf. Ein Teilstrom des Strömungsmittels wird über den Einlass der Hauptströmung entnommen, im Versorgungskanal umgelenkt und dem Messfühler zugeführt; anschliessend wird der Teilstrom über den Auslasskanal wieder der Hauptströmung zurückgeführt.

Es kann als nachteilig an derartigen Vorrichtungen zur Ermittlung des Gehalts von Strömungsmitteln angesehen werden, dass der röhrenförmige Körper zwar über den gesamten Querschnitt einer Lüftungsleitung installierbar ist, der entnommene Teilstrom jedoch im wesentlichen lediglich einer Hälfte des gesamten Querschnitts zuordnenbar ist. Dies liegt darin begründet, dass die auf den röhrenförmigen Körper treffende Hauptströmung sich vom Druckzentrum ihres Strömungsprofils in den Einlass des Versorgungskanals begibt und von dort aus durch selbigen getrieben wird; dabei passiert es, dass der entnommene Teilstrom der Hauptströmung in dem Versorgungskanal aufteilt, und zwar in jeweils etwa zwei gleiche Teile, die von der Mitte des Versorgungskanals jeweils in Richtung der beiden Enden der Versorgungskanals strömen. Somit strömt ein Teil des Teilstroms direkt zum einseitig an dem röhrenförmigen Körper angeordneten Messfühler und der andere Teil des Teilstroms entweicht ohne Untersuchung wieder in die Hauptströmung zurück.

Dies hat zur Folge, dass mit der bekannten Vorrichtung im Wesentlichen lediglich ein Teil der Hauptströmung, nämlich etwa die Hälfte, zum zu untersuchenden Teilstrom im Versorgungskanal beiträgt, und zwar derjenige Teil der Hauptströmung, der auf der dem Messfühler zugewandten Seite des röhrenförmigen Körpers fliesst; die andere Hälfte der Hauptströmung verbleibt somit weitgehend unbeobachtet

Für die Ermittlung des Gehalts einer Hauptströmung ausschliesslich zu Anzeigezwecken, mag diese konventionelle Vorrichtung völlig hinreichend sein, hingegen bedürfen Belüftungssysteme der ununterbrochenen Überwachung auf Menschen gefährdende Bestandteile, wie zum Beispiel Brenngase oder Rauch. Für diese Überwachung ist es somit unerlässlich, dass die Hauptströmung zwischen einander gegenüberliegenden Strömungskanalflächen vollständig erfassbar ist und somit beispielsweise der gesamte Luftstrom als Strömungsmittel der permanenten Untersuchung zuführbar ist.

### DARSTELLUNG DER ERFINDUNG

Es ist daher Aufgabe der Erfindung, ein Messrohr für eine Vorrichtung zur Abtastung eines Strömungsmittels dahingehend weiter zu entwickeln, dass die oben genannten Nachteile behebt. Es soll ein Messrohr angegeben werden, mit dem auf einfache Art der gesamte Abstand zwischen einander gegenüberliegenden Strömungskanalflächen, beispielsweise einer Belüftungsleitung, auf unzulässige Inhaltsstoffe überprüft werden kann.

Die der Erfindung zugrunde liegende Aufgabe wird durch die Gesamtheit der Merkmale des Anspruchs 1 gelöst. Weitere Ausführungsformen sind Gegenstand der abhängigen Ansprüche 2 und 3.

Für die Erfindung wesentlich ist, dass das Messrohr, welches sich im Strömungsmittel über den gesamten Abstand zwischen einander gegenüberliegenden Strömungskanalflächen erstreckt, mindestens eine erste Ventilationsschaufel aufweist, die dem Strömungsmittel entgegengerichtet ist, wobei das Messrohr an seinem der Messsonde abgewandten Ende mit einem Umlenkstopfen versehen ist, womit ein indirekter, von der Ventilationsschaufel erfassbarer Teilstrom in einen inneren Kanal des Messrohrs umlenkbar und der Messsonde (12) zuführbar ist. Der das Messrohr an seinem freien Ende verschliessende Umlenkstopfen macht es möglich, dass selbst dieser indirekte Teilstrom, der mit der Ventilationsschaufel dem Strömungsmittel entnommen wurde, vollständig der Messsonde zuführbar ist. Somit ist es erstmalig möglich, mit diesem Messrohr das Strömungsmittel über den gesamten Abstand einander gegenüberliegender Strömungskanalflächen zu überwachen.

Das Messrohr ist -quasi als passives Messrohr- in der Lage, das Strömungsmittel zwischen einander gegenüberliegenden Strömungskanalflächen zu erfassen und der Messsonde zuzuführen, ohne dass weiter von einer Messsonde entfernte Teilströme für die Überwachung mittels eines Antriebs zur dieser Messsonde geführt werden müssten.

Mit Vorteil wird bei Anströmung des Messrohrs ein Teil des Strömungsmittels mittels der Ventilationsschaufel in den indirekten Teilstrom und einen direkten Teilstrom geteilt, wobei der direkte Teilstrom entlang der Ventilationsschaufel zur Messsonde geführt wird. Die oben beschriebene Anordnung der Ventilationsschaufel macht die Messanordnung unabhängig von der Struktur des anströmenden Strömungsprofils. Zeigt das Strömungsprofil beispielsweise zur Messsonde hin einen höheren Druck als zum Umlenkstopfen, so ist der direkte Teilstrom kleiner als der indirekte; umgekehrt ist der direkte Teilstrom dann grösser als der indirekte, wenn das Strömungsprofil des Strömungsmittels zum Umlenkstopfen einen höheren Druck aufweist. Unabhängig von der Druckverteilung ist somit permanent das Strömungsmittel über den gesamten Abstand zwischen einander gegenüberliegende Strömungskanalflächen überwacht.

Von besonderem Vorteil ist dabei, dass die Verwendung von Ventilationsschaufeln sowohl die Anströmung zur Messsonde als auch die Abströmung zurück in die Hauptströmung des Strömungsmittels unterstützt. Während auf der Anströmseite des Messrohrs der Strömungsmitteldruck entscheidend für das Erfassen von Teilströmen mittels Ventilationsschaufeln massgeblich ist, bewirkt letztere auf der Abströmseite des Messrohrs aufgrund ihres Schaufelprofils eine lokale Druckverminderung; diese Druckverminderung stellt für die dem Strömungsmittel zurückzuführenden Teilströme einen wesentlichen Saugeffekt dar und begünstigt somit die gesamte Strömung zu und weg von der Messsonde.

Eine Ausführungsform des erfindungsgemässen Messrohrs sieht vor, dass das Messrohr eine weitere Ventilationsschaufel oder mehrere weitere Ventilationsschaufeln aufweist, die gegenüber dem Strömungsmittel geöffnet ist bzw. sind. Ebenso kann es von Vorteil sein, wenn das Messrohr einen weiteren inneren Kanal oder mehrere weitere inneren Kanäle aufweist, der bzw. die über den Umlenkstopfen mit der weiteren bzw. den weiteren Ventilationsschaufeln verbunden ist bzw. sind.

Die Messsonden weisen gegenüber dem Messrohr eine Kodierung auf, das heisst, dass eine Messsonde wegen der zuströmenden Teilströme eine eigene, entsprechende innere Kanalstruktur aufweist, damit die zu messenden Teilströme abgetastet werden können. Zudem muss die Messsonde an Strömungsleitungen angebracht werden, die einen sehr unterschiedlichen Verlauf aufweisen können und zum Teil nur eingeschränkte Möglichkeiten bieten für die Montage der Vorrichtung zur Abtastung des Strömungsmittels; somit sollte die Vorrichtung recht flexible anordnenbar sein, das heisst, sie sollte quasi auf jeder Uhrzeigerposition um eine Strömungsleitung herum montierbar sein. Damit gegebenenfalls Anzeigen auf der Messsonde lesbar sind, sollte die Messsonde so angebracht werden können, dass eine leichte Ablesbarkeit gewährleistet ist.

Da die Messsonde zum Messrohr aber kodiert verbunden ist, dass heisst, lediglich in einer Position zum Messrohr angebracht werden kann, ist es nun erstmals möglich, ein erfindungsgemässes Messrohr mit einer Mehrzahl von Ventilationsschaufeln auf einfache Art zur Anströmung eines Strömungsmittels zu positionieren.

Besonders geeignet ist das Messrohr gemäss der Erfindung für den Einsatz in Belüftungssystemen und konkret für die Überwachung von Luftströmungen in Belüftungsleitungen auf Brenngas und Rauch. Im letzteren Fall dient die Messsonde dann als Brandmelder, mit dem im Ereignisfall rasche Massnahmen ermöglicht werden.

### KURZBESCHREIBUNG DER FIGUREN

Die Erfindung soll nachfolgend anhand von Ausführungsbeispielen im Zusammenhang mit der Zeichnung näher erläutert werden. Es zeigen
- Fig. 1: in einer Schnittdarstellung eine Vorrichtung zur Abtastung eines Strömungsmittels in einer Hauptströmungsleitung mit einem erfindungsgemässen Messrohr;
- Fig. 2a, b: in einer perspektivischen Darstellung das Messrohr, umfassend eine Ventilationsschaufel, einen Umlenkstopfen und einen inneren Kanal;
- Fig. 3a,: b eine Ausführungsform des Messrohrs mit zwei Ventilationsschaufeln;
- Fig. 4a, b: eine weitere Ausführungsform des Messrohrs mit einem weiteren, inneren Kanal;
- Fig. 5a, b: jeweils eine weitere Ausführungsform des Messrohrs, und
- Fig. 6: eine perspektivische Darstellung eines Umlenkstopfens mit einem geschnittenen Messrohr.

### DETAILLIERTE BESCHREIBUNG BEVORZUGTER AUSFÜHRUNGSFORMEN

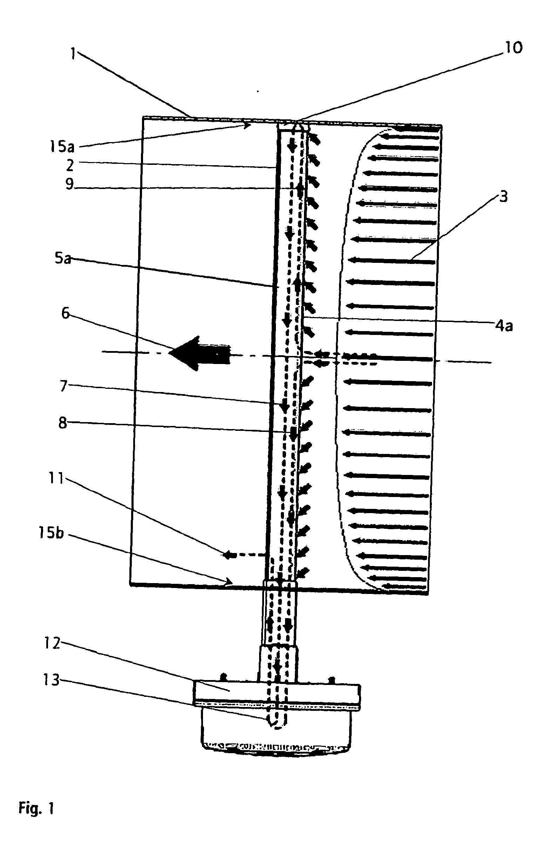

Fig. 1 zeigt in einer Schnittdarstellung ein Strömungsrohr in Form eines Belüftungsrohrs 1, durch den ein Strömungsmittel, namentlich eine Luftströmung 6, gefördert wird. Senkrecht zu diesem Belüftungsrohr ist das efindungsgemässe Messrohr 2 angeordnet, das im Verhältnis zum Querschnitt des Belüftungsrohrs 1 einen sehr kleinen Querschnitt aufweist, um die Luftströmung 6 nur geringfügig zu beeinträchtigen. Das Messrohr 2 erstreckt sich in der Luftströmung 6 zwischen einander gegenüberliegenden Strömungskanalflächen 15a, b, die die Luftströmung 6 nach aussen hin begrenzen.

Das Messrohr 2 ist ausserhalb des Belüftungsrohrs 1 mit einer Messsonde 12 verbunden. An seinem anderen Ende ist das Messrohr mit einem Umlenkstopfen 10 versehen. Zum Luftstrom 6 hin weist das Messrohr 2 eine Ventilationsschaufel 4a auf und zudem einen inneren Kanal 5a, der über den Umlenkstopfen 10 offen ist zur Ventilationsschaufel 4a. Das Messrohr wird Gegenstand weiterer Figuren sein; zunächst wird aber anhand der Fig. 1 lediglich erläutert, wie Teilströme der Luftströmung 6 zwecks Abtastung zu der Messsonde 12 geführt werden können.

Die hier gezeigte Luftströmung 6 weist ein typisches, zur hier nicht dargestellten Achse des Belüftungsrohrs 1 symmetrisches Strömungsprofil 3 auf, mit der das Messrohr 2 angeströmt wird. Wegen des Druckabfalls zur Wandung des Belüftungsrohrs 1 werden mittels der Ventilationsschaufel 4a der zu analysierende Anteil der Luftströmung 6 in einen indirekten Teilstrom und einen direkten Teilstrom 8 aufgeteilt. Während der direkte Teilstrom 8 entlang der Ventilationsschaufel 4a zur Messsonde 12 abströmt, gelangt der indirekte Teilstrom 9 über den Umlenkstopfen 10 in den inneren Kanal 5a des Messrohrs 2 und wird nun durch diesen mit einer Strömungsrichtung 7 ebenfalls zur Messsonde 12 geführt, und zwar parallel zum direkten Teilstrom 8.

Somit gelangen -zwar zeitlich leicht versetzt zueinander-beide Teilströme -der direkte 8 und der indirekte 9-zur Messsonde 12 und können dort einer Abtastung auf unzulässige Anteile in der Luftströmung 6 untersucht werden.

Ohne den Grundgedanken der Erfindung zu verlassen ist es für den Fachmann leicht erkennbar, dass jedes denkbare Strömungsprofil 3 zu entsprechenden indirekten und direkten Teilströme 8, 9 führt.

Nach der Abtastung in der Messsonde 12 werden die Teilströme 8 und 9 über eine Umlenkung 13 als eine Luftströmung 11 wieder der Hauptströmung, nämlich der Luftströmung 6 zugeführt.

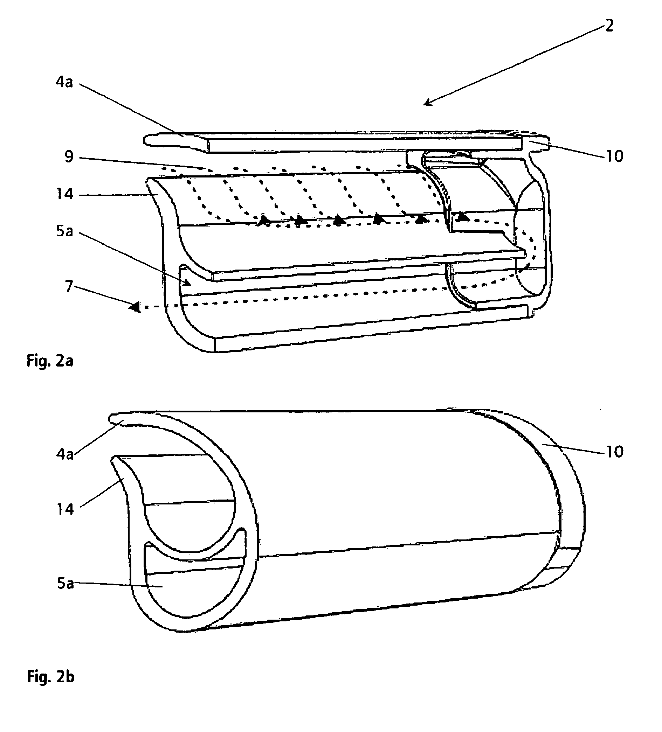

Die Fig. 2a, b zeigen in einer perspektivischen Darstellung eine erste Ausführungsform des Messrohrs 2, dabei ist in der Fig. 2a ein Schnitt durch das Messrohr 2 in der Umgebung des Umlenkstopfens 10 dargestellt. Der indirekte Teilstrom 9 gelangt zwischen einer Lippe 14 und der Ventilationsschaufel 4a in das Messrohr 2 und wird wegen des in Fig. 1 gezeigten Strömungsprofils 3 in Richtung des Umlenkstopfens 10 geführt. Der Umlenkstopfen 10 führt den indirekten Teilstrom 9 in den inneren Kanal 5a und mittels der Strömungsrichtung 7 zum anderen Ende des Messrohrs 2, an dem die hier nicht gezeigte Messsonde 12 angeordnet ist. Die Fig. 2b zeigt diese Ausführungsform des erfindungsgemässen Messrohrs 2 ohne Schnitt; das hier freie Ende des Messrohrs 2, welches an der dem Umlenkstopfen 10 abgewandten Seite liegt, wird in die hier nicht dargestellte Messsonde 12 (siehe Fig. 1) eingeführt.

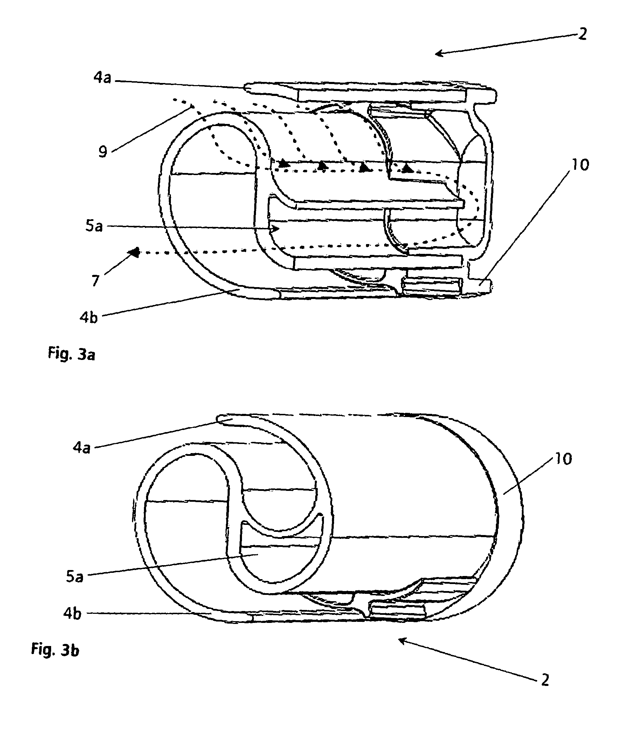

Die Fig. 3a, b zeigen eine weitere Ausführungsform des erfindungsgemässen Messrohrs 2. Diese Ausführungsform unterscheidet sich von der in den Fig. 2a, b gezeigten durch eine zweite Ventilationsschaufel 4b. Durch selbige -siehe auch Fig. 1- können die Teilströme 8, 9 nach Passierung der Umlenkung 13 in der Messsonde 12 als Luftströmung 11 in das Belüftungsrohr 1 zurückgeführt werden.

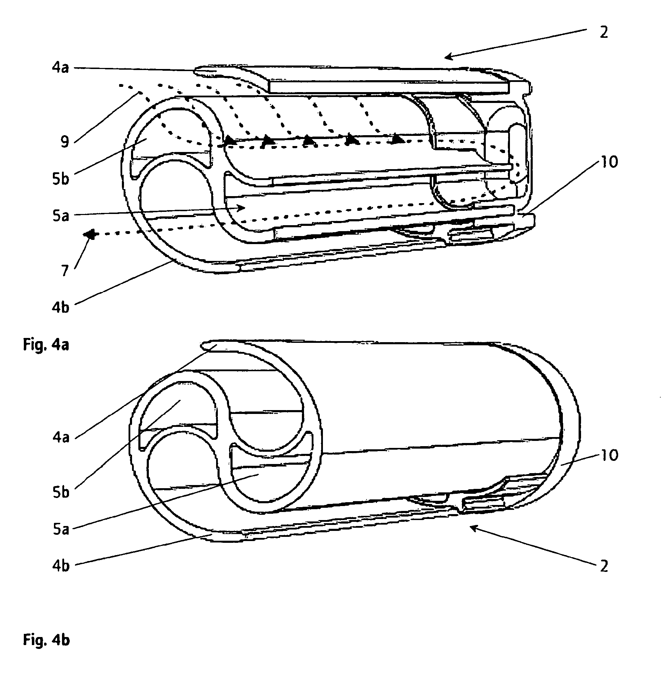

In den Fig. 4a, b ist eine weitere Ausführungsform des efindungsgemässen Messrohrs 2 gezeigt; hier weist das Messrohr 2 gegenüber der Ausführungsform in den Fig. 3a, b zudem einen weiteren inneren Kanal 5b auf und ist somit 180° rotationssymmetrisch aufgebaut. Ein solches Messrohr 2 erlaubt es, dass die an dieses Messrohr 2 anzuschliessende, hier nicht gezeigt Messsonde 12 in einer ersten Position und einer zweiten, dazu 180° gedrehten angeordnet werden kann.

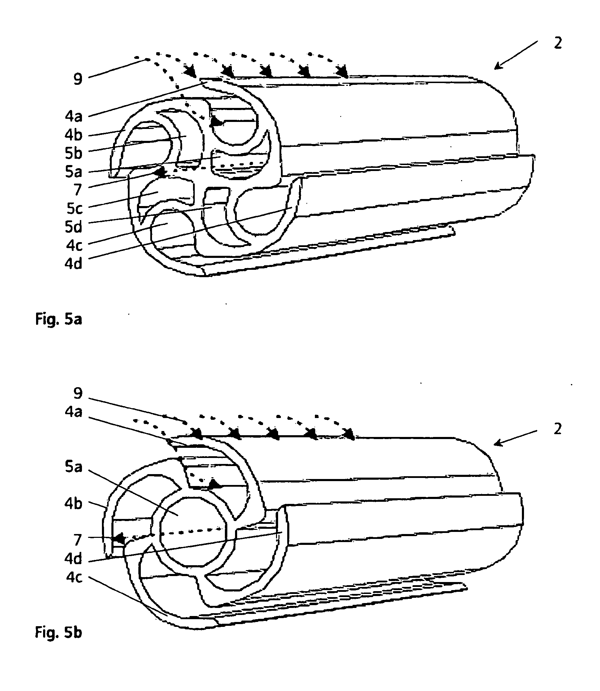

Eine weitere Verfeinerung für die Positionierung einer Messsonde 12 an dem erfindungsgemässen Messrohr 2 ergibt sich aus den weiteren Ausführungsformen, wie sie in den Fig. 5a, b dargestellt sind. Jede der beiden Ausführungsformen weist hier vier Ventilationsschaufeln 4a, b, c, d auf, die entweder mit vier inneren Kanälen 5a, b, c, d, wie in Fig. 5a gezeigt, oder mit lediglich einem einzigen, zentralen inneren Kanal 5a, wie Fig. 5b erhellt, zusammenwirken. Es gilt, entsprechende Umlenkstopfen 10, die hier nicht gezeigt sind, zur Anwendung zu bringen. Beiden in Rede stehenden Ausführungsformen ist gemeinsam, dass sie 90° rotationssymmetrisch aufgebaut sind, was eine vielfältige Montagemöglichkeit der anzuschliessenden Messsonde 12 ermöglicht. Darüber hinaus sind solche Messrohre 2 unabhängig von der gewünschten Positionierung der Messsonde 12 anströmseitig immer richtig angeordnet, da mindestens eine Ventilationsschaufel 4a, b, c, d dem Strömungsmittel 6 entgegenrichtet ist.

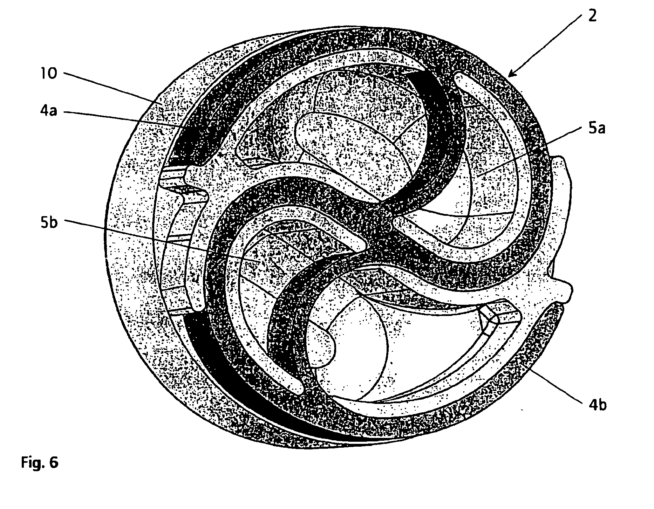

In Fig. 6 ist eine vergrösserte, perspektivische Darstellung des Umlenkstopfens 10 gezeigt. Dieser Umlenkstopfen 10 passt zu der Ausführungsform des Messrohrs 2, wie es in Verbindung mit den Fig. 4a, b bereits oben erläutert wurde. Ein solches Messrohr 2 ist hier in geschnittener Form in den Umlenkstopfen 10 eingesetzt gezeigt. Hier wird deutlich, wie ein indirekter Teilstrom von der Ventilationsschaufel 4a, 4b eingefangen wird und über den Umlenkstopfen 10 zum inneren Kanal 5a bzw. zum inneren Kanal 5b umgelenkt werden kann, um zur Messsonde 12 geführt werden zu können.

Selbstverständlich ist die hier vorgestellte Erfindung nicht auf die gezeigten Ausführungsformen beschränkt; demzufolge ist jede weitere Ausführungsform eines Messrohrs 2 denkbar, welches mittels einer oder mehrerer Ventilationsschaufeln 4a, b, c, d und einem oder mehreren inneren Kanälen 5a, b, c, d in der Lage ist das gesamte Strömungsmittel 6 zwischen einander gegenüberliegenden Strömungskanalflächen 15a, b zu überwachen.

### Bezugszeichenliste

- 1: Belüftungsrohr
- 2: Messrohr
- 3: Strömungsprofil
- 4a, b, c, d: Ventilationsschaufel
- 5a, b, c, d: innerer Kanal in 2
- 6: Strömungsmittel, Luftströmung
- 7: Strömungsrichtung in 5a, 5b
- 8: Teilstrom, direkt
- 9: Teilstrom, indirekt
- 10: Umlenkstopfen
- 11: Luftströmung
- 12: Messsonde, Brandmelder
- 13: Umlenkung
- 14: Lippe
- 15a, b: Strömungskanalflächen

## Patentansprüche

1. Messrohr (2) für eine Vorrichtung zur Abtastung eines Strömungsmittels (6), umfassend eine einseitig an diesem Messrohr (2) angeordnete Messsonde (12), wobei sich das Messrohr (2) zwischen einander gegenüberliegenden Strömungskanalflächen (15a, b) senkrecht zur Hauptströmungsrichtung des Strömungsmittels (6) erstreckt, **dadurch gekennzeichnet, dass** das Messrohr (2) mindestens eine erste Ventilationsschaufel (4a, b, c, d) aufweist, die dem Strömungsmittel (6) entgegengerichtet ist, wobei ein Teil des Strömungsmittels (6) beim Anströmen der Ventilationsschaufel (4a, b, c, d) in das Messrohr (2) einströmt und sich dieser Teil des Strömungsmittels (6) in einen direkten Tellstrom (8) und einen indirekten Teilstrom (9) aufteilt, wobei der direkte Teilstrom (8) entlang der Ventilationsschaufel (4a) direkt zur Messsonde (12) abströmt und der indirekte Teilstrom (9) entgegen der Strömungsrichtung des direkten Teilstroms (8) zu einem Umlenkstopfen (10) führbar ist, der an dem der Messsonde (12) abgewandten Ende des Messrohrs (2) angeordneten ist, und wobei mit dem Umlenkstopfen (10) der indirekte Teilstrom (9) in einen inneren Kanal (5a, b, c, d) des Messrohrs 2 umlenkbar ist und durch diesen inneren Kanal (5a, b, c, d) ebenfalls der Messsonde (12) zuführbar ist.

2. Messrohr (2) nach Anspruch 1, **dadurch gekennzeichnet, dass** das Messrohr (2) eine weitere Ventllationsschaufel oder mehrere weitere Ventilationsschaufein (4a, b, c, d) aufweist, die gegenüber dem Strömungsmittel (6) geöffnet ist bzw. sind.

3. Messrohr (2) nach Anspruch 2, **dadurch gekennzeichnet, dass** das Messrohr (2) einen weiteren inneren Kanal oder mehrere weitere inneren Kanäle (5a, b, c, d) aufweist, der bzw. die über den Umlenkstopfen (10) mit der weiteren Ventilationsschaufel (4a, b, c, d) verbunden ist bzw. den weiteren Ventilationsschaufeln (4a, b, c, d) verbunden sind.

## Claims

1. Measuring tube (2) for a device for sensing a flowing agent (6), comprising a measuring sensor (12) located on one side of this measuring tube (2), whereby the measuring tube (2) extends vertically to the main flow direction of the flowing agent (6) between opposing flow channel surfaces (15a, b), **characterised in that** the measuring tube (2) comprises at least one first ventilation vane (4a, b, c, d) opposed to the flowing agent (6), whereby a part of the flowing agent (6) flows into the measuring tube (2) when flowing towards the ventilation vane (4a, b, c, d) and this quantity of the flowing agent (6) divides into a direct part stream (8) and an indirect part stream (9), whereby the direct part stream (8) flows off along the ventilation vane (4a) directly towards the measuring sensor (12) and the indirect part stream (9) can be guided against the flow direction of the direct part stream (8) towards a deflection plug (10) located at the end of the measuring tube (2) facing away from the measuring sensor (12), and whereby the indirect part stream (9) can be deflected into an inner channel (5a, b, c, d) of the measuring tube (2) by means of the deflection plug (10) and can be guided through this inner channel (5a, b, c, d), also towards the measuring sensor (12).

2. Measuring tube (2) according to claim 1, **characterised in that** the measuring tube (2) comprises a further ventilation vane or several further ventilation vanes (4a, b, c, d) which is/are open towards the flowing agent (6).

3. Measuring tube (2) according to Claim 2, **characterised in that** the measuring tube (2) comprises a further inner channel or several further inner channels (5a, b, c, d), which is/are connected with the further ventilation vane (4a, b, c, d) or the further ventilation vanes (4a, b, c, d) via the deflection plug (10).

## Revendications

1. Tube de mesure (2) pour un dispositif de détection de fluide en écoulement (6), comprenant un capteur de mesure (12) situé sur un côté de ce tube de mesure (2), le tube de mesure (2) se prolongeant verticalement vers le sens d'écoulement principal du fluide en écoulement (6), entre les surfaces de canal d'écoulement contraires (15a, b), **caractérisé par le fait que** le tube de mesure (2) comprend au moins une première ailette d'aération (4a, b, c, d) placée en face du fluide en écoulement (6), une partie du fluide en écoulement (6) s'écoulant dans le tube de mesure (2) lorsque le débit s'effectue vers l'ailette d'aération (4a, b, c, d) et que cette quantité de fluide en écoulement (6) se divise en un courant partiel direct (8) et en un courant partiel indirect (9), le courant partiel direct (8) s'écoulant le long de l'ailette d'aération (4a), directement vers le capteur de mesure (12), et le courant partiel indirect (9) pouvant être acheminé dans le sens contraire au sens d'écoulement du courant partiel direct (8), vers un obturateur de déviation (10) situé en partie extrême du tube de mesure (2), situé dos au capteur de mesure (12), et le courant partiel indirect (9) pouvant être dévié dans un canal intérieur (5a, b, c, d) du tube de mesure (2) au moyen de l'obturateur de déviation (10) et pouvant être acheminé dans ce canal intérieur (5a, b, c, d), également vers le capteur de mesure (12).

2. Tube de mesure (2) selon la revendication 1, **caractérisé par le fait que** le tube de mesure (2) comprend une autre ailette d'aération ou plusieurs autres ailettes d'aération (4a, b, c, d) étant ouverte/s vers le fluide en écoulement (6).

3. Tube de mesure (2) selon la revendication 2, **caractérisé par le fait que** le tube de mesure (2) comprend un autre canal intérieur ou plusieurs autres canaux intérieurs (5a, b, c, d) raccordé/s à l'autre ailette d'aération (4a, b, c, d) ou aux autres ailettes d'aération (4a, b, c, d) par l'intermédiaire de l'obturateur de déviation (10).
